# EUROPÄISCHE PATENTSCHRIFT

(11) **EP 3 215 255 B1**
(45) Veröffentlichungstag und Bekanntmachung des Hinweises auf die Patenterteilung: **19.09.2018**
(21) Anmeldenummer: 15791536.4
(22) Anmeldetag: 23.10.2015
(51) Int. Cl.: B01D 53/00, B21B 9/00, B21B 99/00

(54) **VORRICHTUNG UND VERFAHREN ZUM ABSCHEIDEN VON KONDENSIERBAREN STOFFEN AUS EINEM ABLUFTSTROM**
APPARATUS AND METHOD FOR SEPARATING CONDENSABLE MATERIALS FROM AN EXHAUST AIR STREAM
DISPOSITIF ET PROCÉDÉ DE SÉPARATION DE MATIÈRES CONDENSABLES D'UN FLUX D'AIR D'ÉVACUATION

(30) Priorität: 04.11.2014 DE 102014222518; 01.06.2015 DE 102015210095
(43) Veröffentlichungstag der Anmeldung: 13.09.2017
(73) Patentinhaber: SMS group GmbH, 40237 Düsseldorf (DE)
(72) Erfinder: WIEGARD, Ulrich, 40237 Düsseldorf (DE); AHRENS, Judith, 40237 Düsseldorf (DE)
(74) Vertreter: Kross, Ulrich
(86) Internationale Anmeldenummer: PCT/EP2015/074678
(87) Internationale Veröffentlichungsnummer: WO 2016/071131

(56) Entgegenhaltungen:
- EP-A1- 0 800 851
- EP-A2- 0 582 056
- DE-A1- 1 815 955
- DE-A1- 2 451 157
- JP-A- S5 750 503

## Beschreibung

Die Erfindung betrifft eine Vorrichtung und ein Verfahren zum Abscheiden von kondensierbaren Stoffen aus einem Abluftstrom. Darüber hinaus betrifft die Erfindung ein Walzgerüst und eine Walzstraße mit einer derartigen Vorrichtung.

Die Problematik des Abscheidens von kondensierbaren Stoffen aus einem Abluft- bzw. Gasstrom ist im Stand der Technik grundsätzlich bekannt. Beispielhaft sei auf die folgenden Druckschriften verwiesen US 5,483,801; EP 0 979 670 A1 und DE 40 01 710 A1.

Darüber hinaus ist eine Vorrichtung zum Abscheiden von kondensierbaren Stoffen aus einem Abluftstrom im Stand der Technik bekannt, die wie folgt aufgebaut ist: Die Abluft wird mit Hilfe einer Absaughaube eingesammelt und zu einem Strömungskanal geleitet. Der Abluftstrom wird in dem Strömungskanal zunächst einem Abscheider zugeführt, welcher aus mehreren Maschengestrickkassetten besteht. An dem Maschengestrick agglomerieren sich Öltröpfchen, die in dem Abluftstrom enthalten sind, Die Öltröpfchen werden dann über eine Drainage abgeführt. Der so gefilterte Abluftstrom wird nachfolgend einem Aerosolabscheider zugeführt, um weitere Partikel, insbesondere Aerosole aus dem Abluftstrom herauszufiltern. Angetrieben wird der Luftstrom durch einen Ventilator, welcher dem Aerosolabscheider nachgeschaltet ist. Die Platzierung des Ventilators hinter dem Aerosolabscheider bietet den Vorteil, dass die Propellerblätter des Ventilators durch die Partikel, insbesondere die Öltröpfchen in der Abluft weniger stark verschmutzt werden als wenn er vor den Maschengestrickkassetten platziert wäre.

Hintergrund für die vorliegende Erfindung ist, dass in den USA Grenzwerte für "kondensierbare Stoffe" in Abluftströmen festgelegt worden sind. Ein Verfahren zur Bestimmung von kondensierbaren Partikeln in Abluftströmen bei stationären Gerätschaften sowie die Angabe entsprechender Grenzwerte ist veröffentlicht von Geänderte Beschreibungsseiten
der U. S. Enviromental Protection Agency in dem Aufsatz "Method 202 - Dry impinger method for determining contensable particulate emssions from stationary sources." Eine analoge Vorschrift bzw. ein analoges Verfahren ist für filterbare Stoffe in Abluftströmen bekannt aus dem Aufsatz "Method 5 - Determination of particulate matter emissions from stationary sources".

Das Einhalten von vorgegebenen Grenzwerten für kondensierbare Stoffe in Abluftströmen ist insbesondere ein Problem beim Betrieb von Walzgerüsten oder Walzstraßen beim Walzen von Metallband. Beim Walzen leisten die Walzgerüste Umformarbeit an dem Metallband, wodurch insbesondere in der Umgebung der Walzspalte oftmals eine starke Temperaturerhöhung gegenüber normaler Raumtemperatur festzustellen ist. Beim Walzen werden die Walzen oder das Metallband typischerweise mit einem Kühlmedium und/oder einem Schmiermedium beaufschlagt, wobei diese Medien typischerweise Öle enthalten. Aufgrund der hohen Temperaturentwicklung am Walzspalt kommt es dann zu einer Verdampfung einzelner Bestandteile des Kühl- oder Schmiermediums und insbesondere zur Bildung kondensierbarer Stoffe. Die Abluft ist dann entsprechend kontaminiert.

Die EP 0 582 056 A2 offenbart eine Vorrichtung und ein Verfahren zum Abscheiden von kondensierbaren Stoffen aus einem Abluftstrom gemäß den Oberbegriffen der Ansprüche 1 und 10.

Ausgehend von diesem Stand der Technik liegt der Erfindung die Aufgabe zugrunde, eine bekannte Vorrichtung und ein bekanntes Verfahren zum Abscheiden von kondensierbaren Stoffen aus einem Abluftstrom sowie ein Walzgerüst und eine Walzstraße mit einer derartigen Vorrichtung dahingehend weiterzubilden, dass vorgegebene Grenzwerte für den Anteil von kondensierbaren Stoffen in Abluftströmen, wie sie insbesondere in den USA vorgegeben sind, eingehalten werden können, bevor der Abluftstrom in die Umgebungsluft abgegeben wird.

Diese Aufgabe wird vorrichtungstechnisch durch den Gegenstand gemäß Anspruch 1 gelöst.

In der vorliegenden Beschreibung wird zwischen "Abluft mit kondensierbaren Stoffen" (Abluftstrom B) und "Abluft mit filterbaren Stoffen" (Abluftstrom A) unterschieden. Die "Abluft mit kondensierbaren Stoffen" kann zusätzlich auch filterbare Stoffe enthalten. Umgekehrt wird bei der "Abluft mit filterbaren Stoffen" vorausgesetzt, dass sie keine zur Einhaltung der Grenzwerte relevanten Mengen an kondensierbaren Stoffe enthält.

Die Begriffe "Ventilator" und "Gebläse" werden in der vorliegenden Beschreibung synonym verwendet. Die Begriffe "Öltröpfchen", "Ölpartikel" und "Ölnebel" o. a. stehen jeweils lediglich beispielhaft für den allgemeinen Begriff "filterbare Stoffe".

Die Schaltung des Gebläses vor den Wäscher und den Abscheider bewirkt zunächst, dass ein Unterdruck bzw. ein Saugeffekt lediglich am Eingang des Gebläses besteht, während die von dem Gebläse angesaugte Luft vorteilhafterweise mit Überdruck in die nachgeschalteten Komponenten zur Abluftreinigung gedrückt wird, d. h. in den Wäscher, den ersten Abscheider, die Kühleinrichtung und den zweiten Abscheider. Die Tatsache, dass die besagte Umwandlung des Druckes in dem Abluftstrom von Unterdruck in Überdruck in dem Gebläse aufgrund der veränderten Platzierung des Gebläses nun bereits vor dem Wäscher erfolgt, wirkt sich positiv auf den Dampfdruck des Abluftstromes aus. Aufgrund des erhöhten Dampfdruckes bei der typischerweise erhöhten Temperatur des noch mit kondensierbaren Stoffen belasteten Abluftstromes ergibt sich eine erste Teilkondensation. Darüber hinaus wirkt das Gebläse durch seine rotierenden Einbauten vorteilhafterweise als Zentrifugalabscheider. Konkret agglomerieren filterbare Stoffe in dem Abluftstrom, insbesondere Ölpartikel an den Blättern des Ventilators, um nach ausreichender Agglomeration davon
abzutropfen; auf diese Weise kann bereits ein großer Teil der in dem Abluftstrom enthaltenen filterbaren Stoffe abgeführt werden. Dieser beschriebene Filtereffekt, insbesondere für die Ölpartikel im Abluftstrom ist abhängig von der Anstellung und Ausführung der Ventilatorblätter. Das vorgeschaltete Gebläse bewirkt insofern vorteilhafterweise, dass die Beladung der dem Wäscher und den nachfolgenden Komponenten zugeführten Abluft mit filterbaren Stoffen deutlich vermindert ist gegenüber der Situation, als wenn der Ventilator dem Wäscher und den Abscheidern in Strömungsrichtung nachgeschaltet wäre. Nachteilig an der besagten Platzierung ist zwar die stärkere Verschmutzung der Blätter des Ventilators; dieser Nachteil wird jedoch im Hinblick auf die besagten Vorteile in Kauf genommen.

Nach dem Ventilator wird die Abluft in einem Wäscher einer Absorption unterworfen. Der in der Abluft noch befindliche Nebel an filterbaren Stoffen, insbesondere Ölnebel, wird ausgewaschen und die Waschflüssigkeit reichert sich mit zusätzlich ausgewaschenen Emulgatoren an. Dadurch erst kann ein guter Wascheffekt erzielt werden, da damit erst die Affinität zum in der Abluft befindlichen Öl entsteht. Auch im Wäscher erfolgt eine weitere Absenkung der Temperatur der Abluft. Diese Abkühlung hat den positiven Nebeneffekt, dass bereits im Wäscher ein Teil der kondensierbaren Stoffe in der Abluft, insbesondere solche mit höherer Kondensationstemperatur, mit ausgewaschen werden. Die kondensierbaren Stoffe würden einen mechanischen Filter passieren.

Dem Wäscher ist ein erster Abscheider z. B. in Form von Maschengestrick nachgeordnet, der den Tropfenmitriss aus dem zuvor erfolgten Waschvorgang agglomeriert und abscheidet. Aus der Abluftwäsche ergibt sich die für den nachfolgenden Kühlvorgang wichtige Voraussetzung, dass die Luft gesättigt vorliegt. Mit einer anschließenden Kühlung kommt es zur weiteren Kondensation. Das durch die Kühlung entstehende Kondensat wird abgeschieden und der Tropfenmitriss in einem zweiten Abscheider agglomeriert und abgeschieden. Auf diese Weise, d. h. durch die beschriebene Prozesskette, ist es deshalb möglich,
den Anteil kondensierbarer Stoffe in einem Abluftstrom unterhalb eines geforderten Grenzwertes zu bringen, bevor der Abluftstrom über einen Kamin in die Umgebungsluft abgegeben wird. Ein Teil des anfallenden Kondensates wird zum Ausgleich der Verdunstungsverluste im Wäschersystem benutzt, so dass der Waschvorgang möglichst ohne zusätzliches Medium durchgeführt werden kann.

Abluft, die mit kondensierbaren Stoffen belastet ist, wird getrennt von Abluft abgefangen und behandelt, die nur mit filterbaren, nicht aber mit kondensierbaren Stoffen belastet ist. Deshalb ist ein weiterer/getrennter Strömungskanal zum Durchströmen eines weiteren Abluftstromes mit filterbaren Stoffen vorgesehen.

Dadurch ergibt sich einerseits bei dem Abluftstrom B (mit kondensierbaren Stoffen) eine Wirkungsgraderhöhung durch die höhere Fracht und beim Abluftstrom A ein niedrigeres Temperaturniveau als bei Abluftstrom B, da keine thermische Belastung durch den Walzvorgang erfolgt.

In dem weiteren Strömungskanal (Abluftstrom A) ist ein Gebläse vorgesehen sowie ein dem Gebläse in Strömungsrichtung nachgeschalteter Wäscher und ein dem Wäscher in Strömungsrichtung nachgeschalteter dritter Abscheider. Die Funktionsweise des Gebläses und des Wäschers zum Herausfiltern der filterbaren Stoffe aus der Abluft entspricht der oben beschriebenen Funktionsweise.

Gemäß einem ersten Ausführungsbeispiel ist dem Gebläse in Strömungsrichtung des Abluftstromes B mindestens eine Absaughaube am Eingang des Strömungskanals vorgeschaltet. Die Absaughaube verhindert vorteilhafterweise, dass insbesondere mit kondensierbaren Stoffen kontaminierte Abluft bereits an ihrem Entstehungsort in die Umgebung abgegeben wird. Stattdessen wird die Abluft vielmehr von der Absaughaube eingefangen und dem besagten Strömungskanal zugeführt.

In dem besagten Strömungskanal B ist vorteilhafterweise mindestens ein Ventil vorgesehen zum Absperren des Strömungskanals an geeigneter Stelle.

Optional kann dem dritten Abscheider in dem weiteren Strömungskanal in Strömungsrichtung eine Kühleinrichtung und der Kühleinrichtung ein vierter Abscheider nachgeschaltet sein. Für das Heraustrennen der filterbaren Stoffe aus dem weiteren Abluftstrom sind die Kühleinrichtung und der vierte Abscheider nicht zwingend notwendig, jedoch bewirkt ihr Vorsehen, dass in dem weiteren Strömungskanal dann dieselben Komponenten vorhanden sind, wie sie in dem Strömungskanal für die Abluft mit den kondensierbaren Stoffen vorgesehen sind. Bei diesen Komponenten handelt es sich um den Wäscher, den ersten Abscheider, die Kühleinrichtung und den zweiten Abscheider. Das Vorhandensein der Komponenten in doppelter Ausführung ist insbesondere vorteilhaft bei Ausfall einzelner Komponenten in einem Strömungskanal oder für die Durchführung von Wartungsarbeiten; es kann dann beispielsweise der Abluftstrom mit den kondensierbaren Stoffen durch die jeweils noch intakte, d. h. vollständige Kette von Gerätschaften/Komponenten in dem weiteren Strömungskanal geleitet werden.

Auch für den weiteren Strömungskanal ist es vorteilhaft, wenn dieser mindestens ein Ventil enthält zum Absperren an geeigneter Stelle.

Weiterhin ist es vorteilhaft, wenn der Strömungskanal, welcher von dem Abluftstrom B durchströmt wird, hinter dem zweiten Abscheider mit dem weiteren Strömungskanal, welcher von der Abluft A durchströmt wird, in einer Verbindungsstelle zu einem Sammelkanal zusammengeführt wird. Die beiden Abluftströme werden dann über den gemeinsamen Sammelkanal vorzugsweise über einen Kamin in die Umgebungsluft abgegeben. Das Zuführen des weiteren Abluftstromes bewirkt vorteilhafterweise eine weitere Absenkung der Temperatur
des Abluftstromes B, weil die weitere Abluft in der Regel kühler ist als die Abluft B. Dadurch wird vorteilhafterweise eine zusätzliche Kondensation ermöglicht.

Die oben genannte Aufgabe wird weiterhin durch ein Walzgerüst mit der erfindungsgemäßen Vorrichtung gelöst. Dazu ist vorteilhafterweise eine Absaughaube zum Abfangen von Abluft mit kondensierbaren Stoffen nach dem Walzgerüst angeordnet zum Zuführen dieser Abluft in den Strömungskanal B. Zusätzlich ist vorteilhafterweise je eine weitere Absaughaube über dem Einlauf und dem Auslauf des Walzgerüstes angeordnet, um die dortige Abluft, die in der Regel nur filterbare Stoffe, jedoch keine kondensierbaren Stoffen enthält, einzufangen und dem weiteren Strömungskanal A zuzuführen. Der Grund, warum mit kondensierbaren Stoffen kontaminierte Abluft typischerweise nach dem Walzgerüst, nicht jedoch an dessen Einlauf vorhanden ist, liegt an einer sogenannten Schleppströmung in Bewegungsrichtung des Metallbandes. Durch die sehr hohe Geschwindigkeit, mit welcher das Metallband durch das Walzgerüst bewegt wird, wird die Umgebungsluft in der Nähe des Metallbandes als Schleppströmung in Bewegungsrichtung des Metallbandes mitgerissen. Mit dieser Schleppströmung wird die in unmittelbarer Nähe des Walzspalts vorhandene Abluft, die aufgrund der dort herrschenden hohen Temperatur mit kondensierbaren Stoffen angereichert ist, in Walzrichtung transportiert. Dort kann diese Abluft von der besagten Absaughaube eingesammelt werden. Am Einlauf des Walzgerüstes ist die Abluft dagegen typischerweise lediglich mit filterbaren Stoffen kontaminiert, welche durch die auf die Walzen des Walzgerüstes und/oder das Metallband aufgebrachten Kühl- oder Schmiermittel an die Umgebungsluft abgegeben werden. Zum Einfangen dieser Abluft dient die besagte weitere Absaughaube. Die oben genannte Aufgabe wird weiterhin durch eine Walzstraße mit einer Mehrzahl von Walzgerüsten zum Walzen von vorzugsweise metallischem Walzgut gelöst. Bei einer Walzstraße ist die erfindungsgemäße Vorrichtung derart ausgebildet, dass zwischen mindestens zweien der Walzgerüste jeweils eine Absaughaube des Strömungskanals angeordnet ist zum Absaugen der dortigen mit kondensierbaren Stoffen angereicherten Abluft in den

Strömungskanal B, und wobei weiterhin am Einlauf des ersten Walzgerüstes und vorzugsweise auch am Ende der Walzstraße eine zweite Absaughaube angeordnet ist zum Absaugen der dortigen mit filterbaren Stoffen angereicherten Abluft in den weiteren Strömungskanal A. Der Grund für die Anordnung der Absaughaube zum Absaugen der Abluft mit den kondensierbaren Stoffen zwischen den Walzgerüsten entspricht der zuvor vorgetragenen Begründung für die Anordnung der Absaughaube im Auslauf eines Walzgerüstes. Auch der Grund für das Vorsehen einer weiteren Absaughaube am Einlauf des ersten Walzgerüstes entspricht dem oben im Bezug auf ein einzelnes Walzgerüst genannten Grund. Der Grund dafür, warum nach dem letzten Walzgerüst einer mehrgerüstigen Walzstraße keine Absaughaube mehr vorgesehen sein muss zum Auffangen von Abluft mit kondensierbaren Stoffen, sondern nur noch zum Auffangen von Abluft mit filterbaren Stoffen, liegt in der Tatsache begründet, dass typischerweise die von dem letzten Walzgerüst geleistete Umformarbeit nicht mehr so groß ist wie bei den ersten Walzgerüsten und dass deshalb im Walzspalt des letzten Walzgerüstes typischerweise keine Verdampfung mehr von Stoffen stattfindet, die später durch Kondensation wieder aus der Abluft entfernt werden müssten.

Schließlich wird die oben genannte Aufgabe durch ein Verfahren zum Abscheiden von kondensierbaren Stoffen aus einem Abluftstrom gelöst. Die Vorteile dieses Verfahrens entsprechen den oben mit Bezug auf die Vorrichtung oder das Walzgerüst genannten Vorteilen.

Der Beschreibung sind vier Figuren beigefügt, wobei
- Figur 1: die Vorrichtung zum Abscheiden von kondensierbaren Stoffen aus einem Abluftstrom mit einem ersten Strömungskanal;
- Figur 2: die erfindungsgemäße Vorrichtung nach Figur 1 mit dem Strömungskanal und zusätzlich einem weiteren Strömungskanal;
- Figur 3: ein Walzgerüst mit Absaughauben für die beiden Strömungskanäle der erfindungsgemäßen Vorrichtung; und
- Figur 4: eine Walzstraße mit Absaughauben für die beiden Strömungskanäle der erfindungsgemäßen Vorrichtung zeigt.

Die Erfindung wird nachfolgend unter Bezugnahme auf die genannten Figuren detailliert beschrieben. In allen Figuren sind gleiche technische Elemente mit gleichen Bezugszeichen bezeichnet.

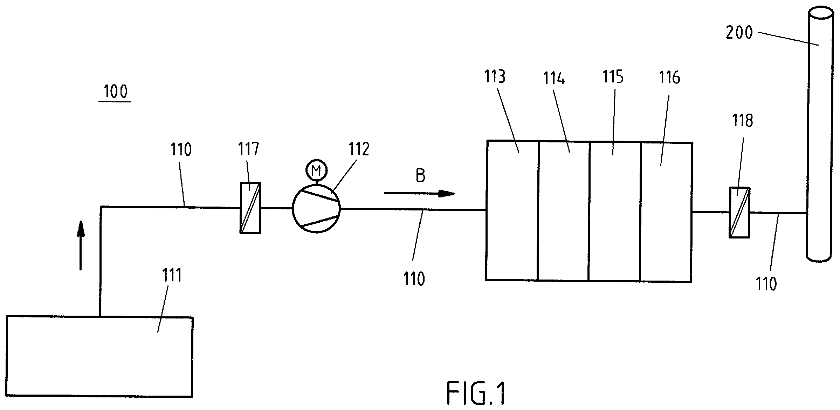

Figur 1 zeigt eine Vorrichtung 100 zum Abscheiden von kondensierbaren Stoffen aus einem Abluftstrom.

Zu diesem Zweck umfasst die Vorrichtung gemäß dem ersten Ausführungsbeispiel eine Absaughaube 111 zum Auffangen der Abluft mit den kondensierbaren Stoffen möglichst nah an ihrem Entstehungsort. Von der Absaughaube 111 wird die Abluft in einen Strömungskanal 110 überführt und dort zunächst von einem Gebläse 112 angesaugt. Insofern besteht vor dem Gebläse 112 ein Unterdruck. Das Gebläse leitet dann die Abluft mit Überdruck weiter an einen Wäscher 113. Von dem Wäscher wird die Abluft einem ersten Abscheider 114 zugeführt, um nachfolgend von einer Kühleinrichtung 115 weiter abgekühlt zu werden. Mit Hilfe der Kühleinrichtung 115 wird die Abluft soweit abgekühlt, dass die kondensierbaren Stoffe aus der Abluft kondensieren; diese werden nachfolgend in einem zweiten Abscheider 116 abgeschieden. Die so gereinigte Abluft wird dann über einen Kamin 200 an die Umgebung abgegeben. In dem Strömungskanal 110 können Ventile 117 und/oder 118 vorgesehen sein, beispielsweise zwischen der Absaughaube 110 und dem Gebläse 112 sowie - in Strömungsrichtung gesehen - am Ausgang des zweiten Abscheiders. Die Funktionsweisen der einzelnen Komponenten, d. h. des Ventilators 112, des Wäschers 113, der beiden Abscheider 114 und 116 sowie der Kühleinrichtung 115 wurden oben im allgemeinen Teil der Beschreibung bereits ausführlich beschrieben, so dass an dieser Stelle von einer Wiederholung der Beschreibung abgesehen wird.

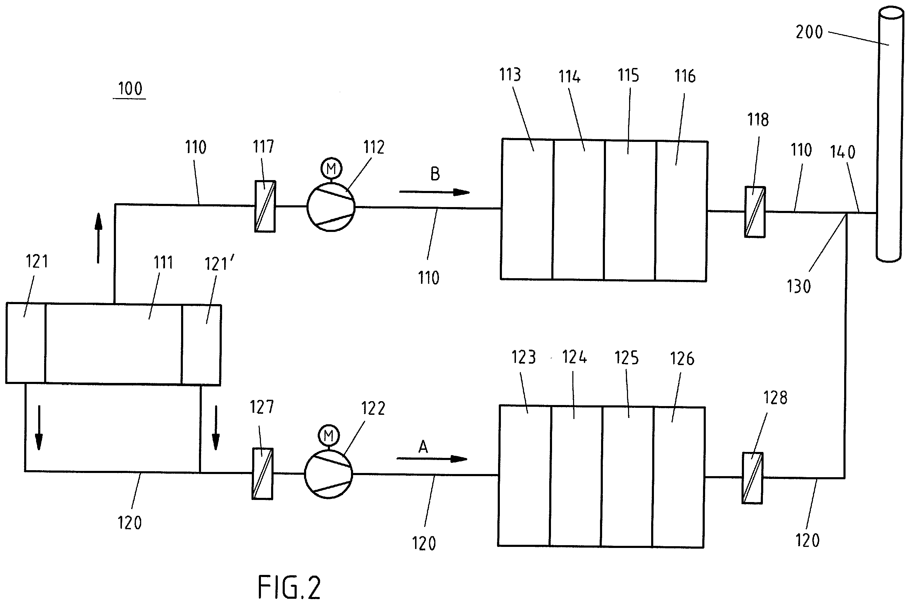

Figur 2 zeigt ein Ausführungsbeispiel der Erfindung. Neben dem besagten Strömungskanal 110 für die mit kondensierbaren Stoffen belastete Abluft umfasst das zweite Ausführungsbeispiel der erfindungsgemäßen Vorrichtung 100 einen weiteren Strömungskanal A, welcher mit dem Bezugszeichen 120 versehen ist. Am Eingang dieses Strömungskanals sind eine oder mehrere weitere Absaughauben 121, 121' vorgesehen zum Auffangen dieser besagten Abluft möglichst nahe an ihrem Entstehungsort. Der weitere Strömungskanal 120 ist im Wesentlichen analog aufgebaut wie der Strömungskanal 110. Konkret umfasst der weitere Strömungskanal auch einen Ventilator bzw. ein Gebläse 122, ein dem Gebläse nachgeschalteten weiteren Wäscher 123, einen dem Wäscher nachgeschalteten dritten Abscheider 124, eine dem dritten Abscheider nachgeschaltete Kühleinrichtung 125 sowie einen der weiteren Kühleinrichtung nachgeschalteten vierten Abscheider 126. Zu beachten ist jedoch, dass die Kühleinrichtung 125 und der vierte Abscheider 126 lediglich optional in dem weiteren Strömungskanal 120 vorzusehen sind, weil sie für das Austragen der filterbaren Stoffe aus der Abluft nicht zwingend notwendig sind. Die Vorteile ihres Vorsehens werden ebenfalls oben im allgemeinen Teil der Beschreibung erwähnt. Auch der weitere Strömungskanal 120 kann Ventile 127 und 128 umfassen, beispielsweise auch wiederum zwischen den Absaughauben und dem Ventilator und am Ausgang des Abscheiders 124 oder 126.

Der Ausgang des weiteren Strömungskanals 120 ist vorteilhafterweise über eine Verbindungsstelle 130 mit dem Ausgang des Strömungskanals 110 verbunden; die beiden Strömungskanäle münden hinter der Verbindungsstelle 130 in einen gemeinsamen Sammelkanal 140 mit welchem die beiden gereinigten Abluftarten dem Kamin 200 zugeführt werden. Die Ventile 118 und 128 jeweils an den Ausgängen des Strömungskanals 110 und des Strömungskanals 120 dienen insbesondere zum Steuern der Abluftströme in den Sammelkanal 140. Das Vorsehen sämtlicher Ventile 117, 118 sowie 127 und 128 ist vorteilhaft, um einzelne Strömungskanäle für den Durchfluss von Abluft zu sperren, insbesondere wenn einzelne Komponenten in den Strömungskanälen ausgefallen sind.

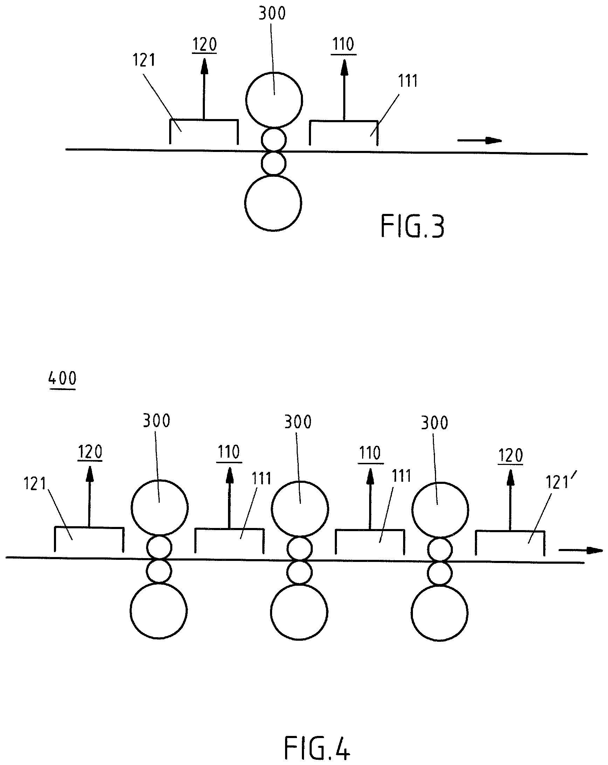

Figur 3 zeigt ein Walzgerüst 300 mit einer Absaughaube 111 in seinem Auslauf, wobei diese Absaughaube zum Auffangen von Abluft mit kondensierbaren Stoffen dient und zum Weiterleiten dieser Abluft in den Strömungskanal 110. Auf der Einlaufseite des Walzgerüstes 300 ist eine weitere Absaughaube 121 zu erkennen zum Auffangen von Abluft mit filterbaren Stoffen. Diese Abluft wird mit Hilfe der weiteren Absaughaube dem weiteren Strömungskanal 120 zugeführt.

Figur 4 zeigt eine Walzstraße 400 mit einer Mehrzahl von Walzgerüsten 300. Zwischen den hier beispielhaft gezeigten drei Walzgerüsten sind jeweils Absaughauben 111 zu erkennen, zum Absaugen der mit kondensierbaren Stoffen belasteten Abluft an den Ausläufen der ersten beiden Walzgerüste. Darüber hinaus sind weitere Absaughauben 120 am Einlauf des ersten Walzgerüstes und 121' am Auslauf der Walzstraße zu erkennen zum Auffangen von Abluft, welche mit filterbaren Stoffen kontaminiert ist.

In den Figuren 3 und 4 ist die Laufrichtung des Metallbandes durch die Walzgerüste mit einem Pfeil gekennzeichnet. Bezüglich der Gründe für die Anordnung der besagten Absaughauben an den jeweiligen Einläufen und Ausläufen der Walzgerüste wird auf den allgemeinen Teil der Beschreibung verwiesen.

### Bezugszeichenliste

- 100: Vorrichtung
- 110: Strömungskanal "B"
- 111: Absaughaube
- 112: Gebläse
- 113: Wäscher
- 114: erster Abscheider
- 115: Kühleinrichtung
- 116: zweiter Abscheider
- 117: Ventil
- 118: Ventil
- 120: weiterer Strömungskanal "A"
- 121: weitere Absaughaube
- 121': weitere Absaughaube
- 122: weiteres Gebläse
- 123: weiterer Wäscher
- 124: dritter Abscheider
- 125: weitere Kühleinrichtung
- 126: vierter Abscheider
- 127: Ventil
- 128: Ventil
- 130: Verbindungsstelle
- 200: Kamin
- 300: Walzgerüst
- 400: Walzstraße

- A: Abluftstrom mit filterbaren Stoffen
- B: Abluftstrom mit kondensierbaren Stoffen

## Patentansprüche

1. Vorrichtung (100) zum Abscheiden von kondensierbaren Stoffen aus einem Abluftstrom (B), aufweisend:
einen Strömungskanal (110), welcher von dem Abluftstrom (B) mit den kondensierbaren Stoffen in einer Strömungsrichtung durchströmbar ist;
einen ersten Abscheider (114) in dem Strömungskanal;
ein Gebläse (112) in dem ersten Strömungskanal (110), welches dem ersten Abscheider (114) in Strömungsrichtung des Abluftstromes vorgeschaltet ist;
und
einen Wäscher (113), welcher zwischen das Gebläse (112) und den ersten Abscheider (114) geschaltet ist;
**gekennzeichnet durch**
einen zweiten Abscheider (116), welcher dem ersten Abscheider in dem Strömungskanal in Strömungsrichtung des Abluftstromes nachgeschaltet ist;
eine Kühleinrichtung (115), welche zwischen den ersten und den zweiten Abscheider (114, 116) geschaltet ist;
einen weiteren Strömungskanal (120) zum Durchströmen eines weiteren Abluftstromes mit filterbaren Stoffen;
ein Gebläse (122) in dem weiteren Strömungskanal (120);
einen dem Gebläse in Strömungsrichtung nachgeschalteten Wäscher (123) in dem weiteren Strömungskanal; und
einen dem Wäscher (123) in Strömungsrichtung nachgeschalteten dritten Abscheider (124) in dem weiteren Strömungskanal.

2. Vorrichtung (100) nach Anspruch 1,
**gekennzeichnet durch**
mindestens eine Absaughaube (111) am Eingang des Strömungskanals (110), welche dem Gebläse (112) in Strömungsrichtung des Abluftstromes vorgeschaltet ist.

3. Vorrichtung (100) nach einem der vorangegangenen Ansprüche,
**gekennzeichnet durch**
mindestens ein Ventil (117, 118) zum Absperren des Strömungskanals.

4. Vorrichtung (100) nach einem der vorangegangenen Ansprüche,
**gekennzeichnet durch**
eine dem dritten Abscheider (124) in dem weiteren Strömungskanal (120) in Strömungsrichtung nachgeschaltete Kühleinrichtung (125); und
einen der Kühleinrichtung in Strömungsrichtung nachgeschalteten vierten Abscheider (126).

5. Vorrichtung (100) nach einem der vorangegangenen Ansprüche,
mindestens eine Absaughaube (121, 121') am Eingang des weiteren Strömungskanals (120), welche dem Gebläse (122) in Strömungsrichtung des weiteren Abluftstromes vorgeschaltet ist.

6. Vorrichtung (100) nach einem der vorangegangenen Ansprüche,
**gekennzeichnet durch**
mindestens ein Ventil (127, 128) zum Absperren des weiteren Strömungskanals (120).

7. Vorrichtung (100) nach einem der vorangegangenen Ansprüche,
**gekennzeichnet durch** eine Verbindungsstelle (130) zum Zusammenführen der Ausgänge von dem Strömungskanal (110) und dem weiteren Strömungskanal (120) zu einem Sammelkanal (140), wobei der Sammelkanal vorzugsweise in einen Kamin (200) mündet.

8. Walzgerüst (300) zum Walzen von vorzugsweise metallischem Walzgut, **gekennzeichnet durch**:
eine Vorrichtung (100) nach Anspruch 7, wobei die Absaughaube (111) des Strömungskanals (110) über dem Auslauf und die Absaughaube (121) des weiteren Strömungskanals (120) über dem Einlauf des Walzgerüstes (300) angeordnet ist.

9. Walzstraße (400) mit einer Mehrzahl von Walzgerüsten (300) zum Walzen von vorzugsweise metallischem Walzgut,
**gekennzeichnet durch**
eine Vorrichtung (100) nach Anspruch 7,
wobei zwischen mindestens zweien der Walzgerüste (300) jeweils eine Absaughaube (111) des Strömungskanals (110) angeordnet ist zum Absaugen der dortigen mit kondensierbaren Stoffen angereicherten Abluft in den Strömungskanal (110); und
wobei am Einlauf des ersten Walzgerüstes (300) und vorzugsweise auch am Ende der Walzstraße eine zweite Absaughaube (121, 121') angeordnet ist zum Absaugen der dortigen mit filterbaren Stoffen angereicherten Abluft in den weiteren Strömungskanal (120).

10. Verfahren zum Abscheiden von kondensierbaren Stoffen aus einem Abluftstrom, mit folgenden Schritten:
Absaugen des Abluftstroms mit den kondensierbaren Stoffen zumindest in der Nähe des Ortes seiner Entstehung mit Hilfe eines Gebläses (112);
Herauswaschen von filterbaren Stoffen, insbesondere Öltröpfchen und Feinstaerosolen, aus dem Abluftstrom; und
Abscheiden eines Tropfenmitriss aus dem gewaschenen Abluftstrom;
**gekennzeichnet durch** folgende Schritte:
Kühlen des verbleibenden Abluftstromes zum Kondensieren der kondensierbaren Stoffe;
Abscheiden der kondensierten Stoffe;
Absaugen eines weiteren Abluftstromes mit filtrierbaren Stoffen zumindest in der Nähe seiner Entstehung mit Hilfe eines Gebläses (122); Herauswaschen der filterbaren Stoffe, insbesondere Öltröpfchen aus dem weiteren Abluftstrom; und
Abscheiden eines Tropfenmitriss aus dem gewaschenen weiteren Abluftstrom.

11. Verfahren nach Anspruch 10,
**gekennzeichnet durch** folgende weitere Schritte:
Kühlen des verbleibenden weiteren Abluftstromes; und
Abscheiden des verbleibenden weiteren Abluftstromes.

12. Verfahren nach Anspruch 10 oder 11,
**gekennzeichnet durch**
Zusammenführen des Abluftstromes mit den kondensierbaren Stoffen und des Abluftstromes mit den filtrierbaren Stoffen zu einem Sammelabluftstrom; und
vorzugsweise Abführen des Sammelabluftstromes durch einen Kamin (200).

## Claims

1. Apparatus (100) for separating condensable substances from an exhaust air flow (B), comprising:
a flow channel (110), through which substances condensable from the exhaust air flow (B) can flow in a flow direction;
a first separator (114) in the flow channel;
a fan (112) in the first flow channel (110), the fan being upstream of the first separator (114) in flow direction of the exhaust air flow; and
a washer (113) connected between the fan (112) and the first separator (114);
**characterised by**
a second separator (116) downstream of the first separator in the flow channel in flow direction of the exhaust air flow;
a cooling device (115) connected between the first and the second separators (114, 116);
a further flow channel (120) for throughflow of a further exhaust air flow with filterable substances;
a fan (122) in the further flow channel (120);
a washer (123), which is downstream of the fan in flow direction, in the further flow channel; and
a third separator (124), which is downstream of the washer (123) in flow direction, in the further flow channel.

2. Apparatus (100) according to claim 1, **characterised by** at least one suction hood (111) at the inlet of the flow channel (110), the hood being upstream of the fan (112) in flow direction of the exhaust air flow.

3. Apparatus (100) according to one of the preceding claims, **characterised by** at least one valve (117, 118) for blocking the flow channel.

4. Apparatus (100) according to any one of the preceding claims, **characterised by** a cooling device (125) downstream of the third separator (124) in the further flow channel (120) in flow direction; and a fourth separator (126) downstream of the cooling device in flow direction.

5. Apparatus (100) according to any one of the preceding claims, **characterised by** at least one suction hood (121, 121') at the inlet of the further flow channel (120), the hood being upstream of the fan (122) in flow direction of the further exhaust air flow.

6. Apparatus (100) according to any one of the preceding claims, **characterised by** at least one valve (127, 128) for blocking the further flow channel (120).

7. Apparatus (100) according to any one of the preceding claims, **characterised by** a connecting point (130) for combining the outlets from the flow channel (110) and the further flow channel (120) to form a collecting channel (140), wherein the collecting channel preferably communicates with a flue (200).

8. Roll stand (300) for rolling preferably metallic rolling material,
**characterised by**:
apparatus (100) according to claim 7, wherein the suction hood (111) of the flow channel (110) is arranged above the outlet and the suction hood (121) of the further flow channel (120) is arranged above the inlet of the roll stand (300).

9. Rolling train (400) with a plurality of roll stands (300) for rolling preferably metallic material,
**characterised by**
apparatus (100) according to claim 7,
wherein a respective suction hood (111) of the flow channel (110) is arranged between at least two of the roll stands (300) for inducting the exhaust air, which is laden with condensable substances thereat, in the flow channel (110); and
wherein a second suction hood (121, 121') is arranged at the inlet of the first roll stand (300) and preferably also at the end of the rolling train for inducting the exhaust air, which is laden with filterable substances thereat, in the further flow channel (120).

10. Method for separating condensable substances from an exhaust air flow, comprising the following steps:
inducting the exhaust air flow with the condensable substances at least in the proximity of the location, at which they arise, with the help of a fan (112);
washing filterable substances, particularly oil droplets and highly fine aerosols, out of the exhaust air flow; and
separating entrained droplets from the washed exhaust air flow;
**characterised by** the following steps:
cooling the remaining exhaust air flow for condensing the condensable substances;
separating the condensed substances;
inducting with the help of a fan (122) a further exhaust air flow with filterable substances at least in the vicinity at which it arises;
washing filterable substances, particularly oil droplets, out of the further exhaust air flow; and
separating entrained droplets from the washed further exhaust air flow.

11. Method according to claim 10, **characterised by** the following further steps; cooling the remaining further exhaust air flow; and separating the remaining further exhaust air flow.

12. Method according to claim 10 or 11, **characterised by** leading together the exhaust air flow with condensable substances and the exhaust air flow with the filterable substances to form a collective exhaust air flow; and preferably discharging the collective exhaust air flow through a flue (200).

## Revendications

1. Dispositif (100) pour la séparation de substances condensables à partir d'un courant d'évacuation d'air (B), présentant :
un canal d'écoulement (110) qui peut être traversé par le courant d'évacuation d'air (B) comprenant les substances condensables, dans une direction d'écoulement ;
un premier séparateur (114) dans le canal d'écoulement ;
un ventilateur (112) dans le premier canal d'écoulement (110) qui est monté en amont du premier séparateur (114) dans la direction d'écoulement du courant d'évacuation d'air ; et
un laveur (113) qui est monté entre le ventilateur (112) et le premier séparateur (114) ;
**caractérisé par** :
un deuxième séparateur (116) qui est monté à la suite du premier séparateur dans le canal d'écoulement dans la direction d'écoulement du courant d'évacuation d'air ;
un mécanisme de refroidissement (115) qui est monté entre le premier et le deuxième séparateur (114, 116) ;
un canal d'écoulement supplémentaire (120) destiné à être emprunté par un courant d'évacuation d'air supplémentaire comprenant des substances aptes à être filtrées ;
un ventilateur (122) dans le deuxième canal d'écoulement (120) ;
un laveur (123) monté à la suite du ventilateur dans la direction d'écoulement, dans le canal d'écoulement supplémentaire ; et
un troisième séparateur (124) monté à la suite du laveur (123) dans la direction d'écoulement, dans le canal d'écoulement supplémentaire.

2. Dispositif (100) selon la revendication 1,
**caractérisé par**
au moins un capot d'aspiration (111) à l'entrée du canal d'écoulement (110), qui est monté en amont du ventilateur (112) dans la direction d'écoulement du courant d'évacuation d'air.

3. Dispositif (100) selon l'une quelconque des revendications précédentes,
**caractérisé par**
au moins une soupape (117, 118) destinée à obturer le canal d'écoulement.

4. Dispositif (100) selon l'une quelconque des revendications précédentes,
**caractérisé par**
un mécanisme de refroidissement (125) monté à la suite du troisième séparateur (124) dans le canal d'écoulement supplémentaire (120) dans la direction d'écoulement ; et
un quatrième séparateur (126) monté à la suite du mécanisme de refroidissement dans la direction d'écoulement.

5. Dispositif (100) selon l'une quelconque des revendications précédentes,
**caractérisé par**
au moins un capot d'aspiration (121, 121') à l'entrée du canal d'écoulement supplémentaire (120), qui est monté en amont du ventilateur (122) dans la direction d'écoulement du courant d'évacuation d'air supplémentaire.

6. Dispositif (100) selon l'une quelconque des revendications précédentes,
**caractérisé par**
au moins une soupape (127, 128) destinée à obturer le canal d'écoulement supplémentaire (120).

7. Dispositif (100) selon l'une quelconque des revendications précédentes,
**caractérisé par**
une interface (130) destinée à fusionner les sorties du canal d'écoulement (110) et du canal d'écoulement supplémentaire (120) afin d'obtenir un canal collecteur (140) ; dans lequel le canal collecteur (140) débouche de préférence dans une cheminée (200).

8. Cage de laminoir (300) pour le laminage d'un produit de laminage de préférence métallique,
**caractérisée par**
un dispositif (100) selon la revendication 7 ; dans laquelle le capot d'aspiration (111) du canal d'écoulement (110) est disposé au-delà de la sortie et le capot d'aspiration (121) du canal d'écoulement supplémentaire (120) est disposé au-delà de l'entrée de la cage de laminoir (300).

9. Train de laminoir (400) comprenant un certain nombre de cages de laminoir (300) pour le laminage d'un produit de laminage de préférence métallique,
**caractérisé par**
un dispositif (100) selon la revendication 7 ;
dans lequel, entre au moins deux des cages de laminoir (300), est disposé respectivement un capot d'aspiration (111) du canal d'écoulement (110) à des fins d'aspiration de l'air d'échappement enrichi à cet endroit avec des substances condensables, dans le canal d'écoulement (110) ; et
dans lequel, à l'entrée de la première cage de laminoir (300) et, de préférence, également à la fin du train de laminoir, est disposé un deuxième capot d'aspiration (121, 121') pour l'aspiration de l'air d'échappement enrichi à cet endroit avec des substances aptes à être filtrées, dans le canal d'écoulement supplémentaire (120).

10. Procédé pour la séparation de substances condensables à partir d'un courant d'évacuation d'air, comprenant les étapes suivantes dans lesquelles :
on aspire le courant d'évacuation d'air comprenant les substances condensables au moins à proximité de l'endroit de son apparition, à l'aide d'un ventilateur (112) ;
on élimine par lavage les substances aptes à être filtrées, en particulier les gouttelettes d'huile et les très fins aérosols, à partir du courant d'évacuation d'air ; et
on sépare un entraînement de gouttelettes à partir du courant lavé d'évacuation d'air ;
**caractérisé par** les étapes suivantes dans lesquelles :
on refroidit le courant subsistant d'évacuation d'air à des fins de condensation des substances condensables ;
on sépare les substances condensées ;
on aspire un courant supplémentaire d'évacuation d'air comprenant des substances aptes à être filtrées au moins à proximité de son apparition à l'aide d'un ventilateur (122) ;
on élimine par lavage les substances aptes à être filtrées, en particulier les gouttelettes d'huile à partir du courant supplémentaire d'évacuation d'air ; et
on sépare un entraînement de gouttelettes à partir du courant supplémentaire lavé d'évacuation d'air.

11. Procédé selon la revendication 10,
**caractérisé par** les étapes supplémentaires suivantes dans lesquelles :
on refroidit le courant d'évacuation d'air supplémentaire qui subsiste ; et
on sépare le courant d'évacuation d'air supplémentaire qui subsiste.

12. Procédé selon la revendication 10 ou 11,
**caractérisé par**
la fusion du courant d'évacuation d'air comprenant les substances condensables et du courant d'évacuation d'air comprenant les substances aptes à être filtrées afin d'obtenir un courant collecteur d'évacuation d'air ; et
de préférence, on évacue le courant collecteur d'évacuation d'air à travers une cheminée (200).
